# EUROPEAN PATENT APPLICATION

(11) **EP 1 545 017 A1**
(43) Date of publication of application: **22.06.2005**
(21) Application number: 03257870.0
(22) Date of filing: 15.12.2003
(51) Int. Cl.: H04B 1/69, H04B 7/216

(54) **Digital communication system and method**

(71) Applicant: Agilis Communication Tech. Pte. Ltd., Singapore 609602 (SG)
(72) Inventor: Jayasuriya, Rajanik Mark, Singapore 760733 (SG); Yoong En, Christopher Hu, Singapore 731690 (SG); Gang, Liu, Singapore 640324 (SG); Sivakumar, Sandrasegaram Pillai, Singapore 680642 (SG); Hua, Jeff Zheng Jian, Singapore 520138 (SG)
(74) Representative: Haley, Stephen

(57) **Abstract**

A digital communication system for communication between a first terminal and a second terminal, the first terminal including a spread spectrum modulator for spreading a transmitted signal, the transmitted signal being spread by a spread factor. The spread system spectrum modulator forms part of a first terminal modem. The second terminal includes spread system demodulator that forms part of a second terminal modem. A method is also disclosed.

## Description

The present invention relates to a digital communication system and method that sends and receives data to and from stations in a satellite communication system, digital radio and cellular telephony and refers particularly, though not exclusively, to such a system and method that enables the use of relatively small remote antennas.

In a digital communication system, the minimum useable antenna size normally depends on the antenna's required transmit and receive gain, required receive carrier-to-noise ("C/N") level, transmit and receive beam width, and the maximum allowed EIRP flux density signal energy for off-axis antenna patterns. A larger antenna has advantages of a better antenna gain, smaller beam width and less antenna noise, compared to a smaller antenna, if all other parameters remain the same. However, a big antenna is expensive, and is not conveniently transportable. A smaller antenna allows portability, but has lower transmit gain and lower receive gain, compared to a larger antenna.

A lower receive gain may lead to a poor quality link. A lower transmit gain may mean the transmitter must increase its transmit power to compensate for the shortfall in the transmit gain. By increasing its transmission power, the transmitter may exceed the defined EIRP flux density signal energy requirements for off-axis antenna patterns. It may also introduce interference to adjacent receivers of the same or different types of communication systems, and may even introduce a health hazard. A smaller antenna also has a wider beam width, which makes it more susceptible to interference from surrounding units. This further reduces the quality of the link.

In one aspect the present invention provides a digital communication system for communication between a first terminal and a second terminal, the first terminal comprising a spread spectrum modulator for spreading a signal, the signal being spread by a spread factor.

The spread factor may be in the range 1 to 999, preferably the spread factor is in the range 10 to 50, and more preferably the spread factor is 31. The spread spectrum modulator may be a direct sequence spread spectrum modulator or a frequency hopping speed spectrum modulator.

The second terminal may have a spread spectrum demodulator, which can be a frequency hopping spread spectrum modulator, or a direct sequence spread spectrum demodulator, but is preferably a direct sequence spread spectrum demodulator. The direct sequence spread spectrum demodulator may form part of a second terminal modem, the second terminal modem further comprising at least one of: a block converter, a down converter, a forward error correction decoder, a microcontroller, and an interface.

The direct sequence spread system spectrum modulator may form part of a first terminal modem, the first terminal modem also comprising at least one of: an interface, a microprocessor, a forward error correction encoder, a further modulator, an up converter, a block up converter, and an amplifier.

The first terminal modem may be part of a first terminal equipment, the first terminal equipment further comprising at least one of: a transmit reject filter, a low noise block filter, a block up converter, an up converter, and an amplifier.

The second terminal modem may be part of a second terminal equipment, the second terminal equipment further comprising at least one of: a transmit reject filter, a block down converter, a microcontroller.

The first terminal may be a remote terminal and the second terminal may be a hub terminal.

In another aspect of the invention, there is provided a method for the reduction of noise relative to a signal, the method including the steps:
(a) at a first terminal, generating a signal to be transmitted;
(b) at the first terminal modulating the signal to spread the signal to form a spread signal; and
(c) the first terminal transmitting the spread signal.

The spread signal may be received by a second terminal; the second terminal using a demodulator to de-spread the spread signal and any received signal noise.

In a further aspect of the invention there is provided a method for the reduction of noise relative to a signal, the method including the steps a second terminal receiving a spread signal; and the second terminal using a demodulator to despread the spread signal and any received signal noise to form the signal and to reduce the received signal noise. The spread signal may be transmitted by a first terminal, the first terminal modulating a signal to spread the transmitted signal to form the spread signal prior to transmitting the spread signal.

The present invention also provides a computer usable medium comprising a computer program code that is configured to cause at least one processor to execute one or more functions to enable an apparatus to perform the method described above.

For both forms, the first terminal may comprise a spread spectrum modulator for spreading the signal, the signal being spread by a spread factor.

In order that the invention may be better understood and readily put into practical effect, there shall now be described by way of non-limitative example only preferred embodiments of the present invention, the description being with reference to the accompanying illustrative drawings in wihich:
Figure 1a is an illustration and graph of an antenna situation with negligible interference;
Figure 1b is an illustration and graph of an antenna situation with interference;
Figure 1c is an illustration and graph of the antenna situation of Figure 1b after use of a preferred aspect of the present invention;
Figure 2 is a block diagram of a preferred system for use in a remote terminal;
Figure 3 is a block diagram of the modem of Figure 2;
Figure 4 is a block diagram for a preferred system for use in a hub station;
Figure 5 is a block diagram of the modem of Figure 4;
Figure 6 is a block diagram of an alternative system for use in a remote terminal;
Figure 7 is a block diagram of three different forms of down converters for use in the embodiment of Figure 6; and
Figure 8 is a block diagram of two different forms of up converters for use in the embodiment of Figure 6.

In communication systems, whether it is satellite, digital radio or cellular (or a hybrid of two or more of them) by using accessing techniques that require a lower power density, such as spread spectrum (for example DSSS, FHSS, and so forth), a smaller antenna can be used. Despite using a smaller antenna it is possible to still meet the defined EIRP flux density signal energy requirements for off-axis antenna patterns, and minimum adjacent interference, whether it is from the same type of communication system (for example, satellite-to-satellite) or different type of communication systems (satellite, digital radio, cellular, UHF, and so forth).

Various modulation schemes such as, for example, BPSK, QPSK, OQPSK and so forth; network topologies such as, for example Star, Mesh, Hybrid and so forth; communication systems such as for example, satellite, digital radio, cellular & so forth; and frequency band such as, for example, L-band, C-band, Ku-band, S-band, and so forth, may be used.

The accessing technique may be Direct Sequence Spread Spectrum (DSSS), Frequency Hopping Spread Spectrum (FHSS), or otherwise, and may be used in satellite communications. By using DSSS, after spreading the signal will have a lower power density. Thus will meet regulatory requirements, while requiring very low energy bits/noise to achieve a good link quality. The low power transmission should introduce only a small amount of adjacent interfering-signal power, which typically is below the interfered system's noise level. When the received signal is being de-spread to receive the desired signal, the same process will spread the adjacent interfering signal (or signals) to a relatively low level, and thus cause reduced influence on the received link quality.

This invention can be used with different network topologies as long as the transmit and receive antenna sizes are suitable for the required link quality.

Throughout the description, like components have like reference numerals.

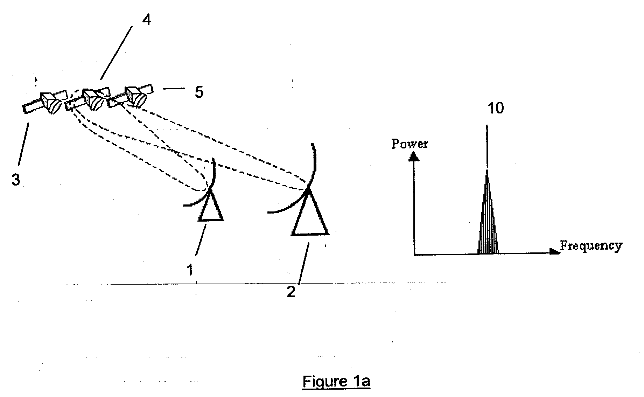

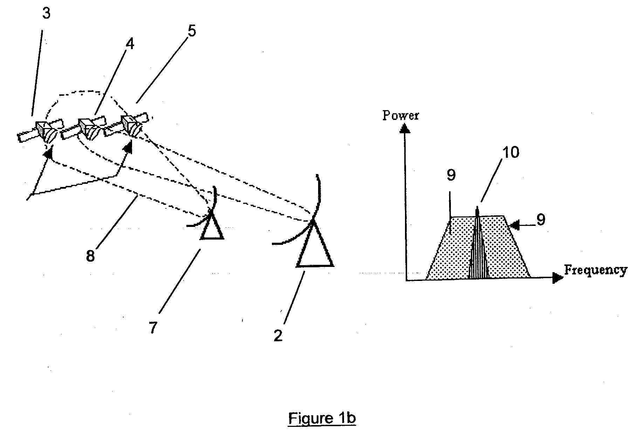

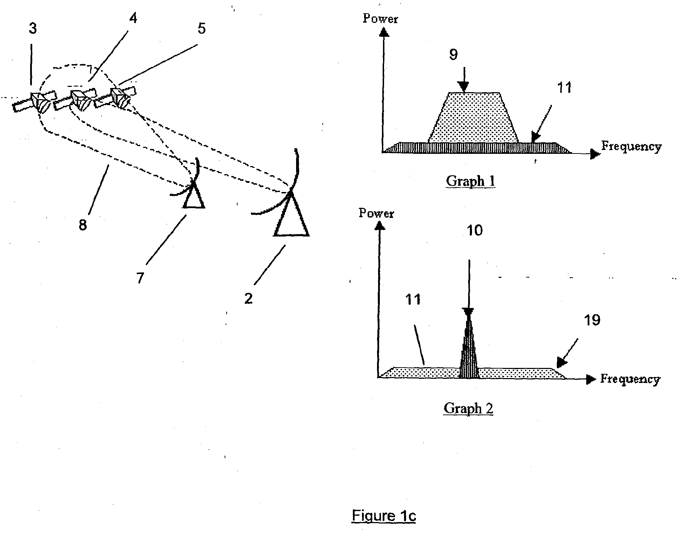

Figure 1a shows a satellite communication, situation where the beam 6 of a 2.4m antenna 1 communicating with hub antenna 2 via a satellite 4. Antenna 1 has a beam width that causes negligible interference with adjacent satellites 3 and 5. The graph shows the signal 10 received by the remote antenna 1, with the desired frequency carrier of the hub antenna 2 being at the peak of the curve 10.

Figure 1b shows a smaller antenna 7 that has a beam 8 of a wider beam width. The beam 8 will experience interference from and to adjacent satellites 3 and 5. This is shown in the graph where the interference is shown as 9.

Figure 1c shows the same smaller antenna 7 as Figure 1b. The received interference 9 is the same as in the graph of Figure 1b. After spreading, the desired signal transmitted is 11 on Graph 1. At the receiver, after dispreading, the desired signal will be de-spread from the spread signal 11 of Graph 1 to the de-spread signal 10 of Graph 2; while the interference signal will be spread from the un-spread signal 9 of Graph 1 to the spread signal 11 of Graph 2.

The present invention links remote stations or terminals 1 with a relatively small antenna to the hub station 2 that has a large antenna. The remote stations or terminals 1 may be mobile, if desired or required. The hub station 2 preferably uses a similar set-up as the remote terminals 1. The main differences in the equipment may be in the antenna size, transceiver type, intermediate frequency, and the addition of any required routing capability to suit the network topology used.

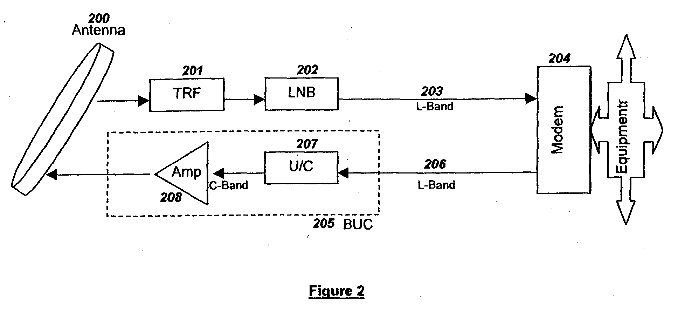

Figure 2 shows the station block diagram of the remote station. An antenna 200, such as the antenna 7 of Figures 1c, receives desired signals 9 and interference 11 as shown in Graph 1 in C-band. Both signals 9 and 11 pass through a transmit reject filter 201 and a low noise block 202 that process the C-band signal to L-band. The L-band signal 203 is then processed by a modem 204. The transmission L-band signal 206 is sent to block up converter 205 by modem 204. The block up converter 205 includes an up converter 207. The C-band signal is then amplified in amplifier 208 and transmitted by antenna 200.

Modem 204 is preferably an L-Band modem with Direct Sequence Spread Spectrum (DSSS) accessing or Frequency Hopping Spread Spectrum (FHSS), equipped with Turbo Coding (TPC) and Forward Error Correction (FEC) technique.

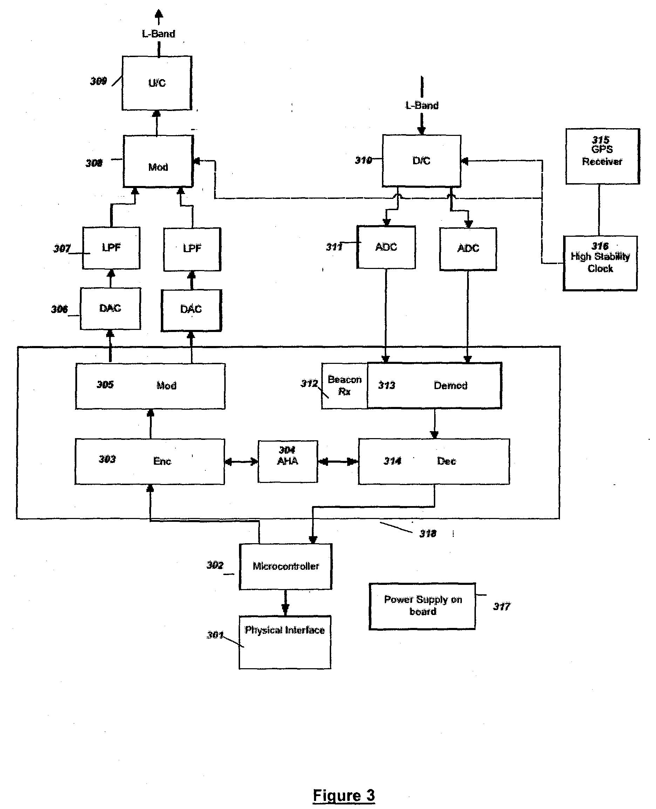

Figure 3 shows the modem 204 block diagram. The modem 204 receives digital data via physical interface (301). The digital data is processed by micro controller 302. The data can be at any rate and be according to any protocol, depending on the application and available resources. For example, the data may have been sent from an SIP phone. The data may be multiplexed and may operate at aggregate data rate of 64kps via an RJ45 10 Base T interface. The micro controller 302 can pass the data directly to forward error correction encoder 303, or process the data by, for example, protocol translation or adding extra information, before passing the data to the encoder 303.

The output of the encoder 303 is then spread by a spread spectrum modulator 305, which may be, for example, a DSSS or FHSS modulator. Different spread factors can be selected for the modulator 305 according to factors such as, for example, the available uplink power, available bandwidth, and so forth. The spread factor may be selected depending on the allowable overheads in the system. The spread factor may be in the range from 1 to 999. In a typical application, a spread factor between 10 to 50 may be used. Preferably, a spread factor of 31 may be used. The data that has been spread will then pass to the Digital-to-Analog Converter ("DAC") 306, and the analog signal output from DAC 306 will pass through a low pass filter 307. The filtered analog signal output from filter 307 will then modulated by a modulator 308.

The data from modulator 305 needs to be converted to analog by DAC 306 because the modulator 308 may be an analog signal modulator. If a digital modulator is used in place of analog modulator 305, the output of modulator 305 may be connect directly to the modulator 308.

Any modulation scheme can be used in the modulators depending on the requirements such as, for example, available bandwidth, spread factor required, interference level, and so forth. The modulators may be selected according to the modulation schemes needed. Preferably, a modulator of capable BPSK and QPSK modulation is selected. More preferably, the modulation scheme selected is QPSK.

The Intermediate Frequency (IF) of the modulation signal may be of any frequency. Preferably a frequency in the range of 900 to 1900 MHz is used, more preferably the frequency is between 950 to 1450 MHz.

The signal is then converted to the desired transmission frequency and amplified by a bock up converter 205 (Figure 2). Different IF frequencies may be used. The selection of IF frequency 203 or 206 will be dependent on application requirement and availability of equipment 202, 207 and 204. The desired transmit frequency conversion of the converter 205 depends on the application (C-band, Ku-band, S-band, and so forth). Preferably, C-band frequency is used. The output of converter 205, which is in C-band, is fed to the antenna 200 and is transmitted. The antenna 200 can be of any size and category, depending on the application, need, and available technology.

The receiving hub antenna 2 picks up the transmitted signal. The hub antenna 2 may be of any size, depending on the application, design and other requirements. Preferably, the hub antenna 2 is a 32m antenna. As disclosed above, the equipment used with hub antenna 2 may be similar to, or different from, the equipment used with the remote terminals 1. Preferably, the network is a Star network and thus the hub terminal 2 will do the processing and routing of the data to all remote terminals 1.

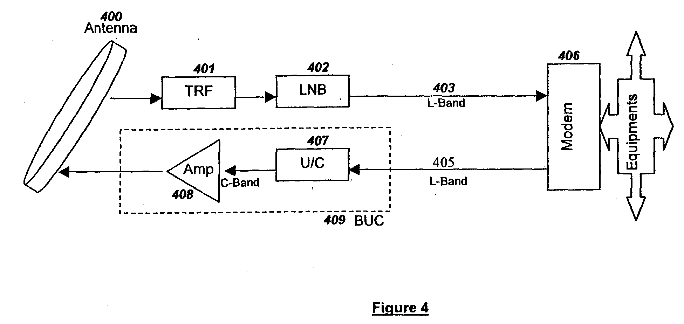

Referring to Figure 4, it shows the equipment of hub antenna 2 of Figure 1c. The received signal is received by the receiving antenna 400, filtered by the transmit reject filter 401, amplified and down converted to second Intermediate Frequency 403 by a low noise block converter 402, and then received by the modem 406. The frequency selection of the IF frequencies 403 & 405 depends on the equipment 402, 407 and 406, and on application requirement. The signal received at antenna 400 is the frequency corresponding to the transmitted signal, like C-Band, Ku-Band, S-Band or otherwise, preferably a standard C-band satellite downlink frequency. The modem used 406 is the matching modem to the modem 204 used at the remote terminal 1. For example, a DSSS or FHSS modem may be used.

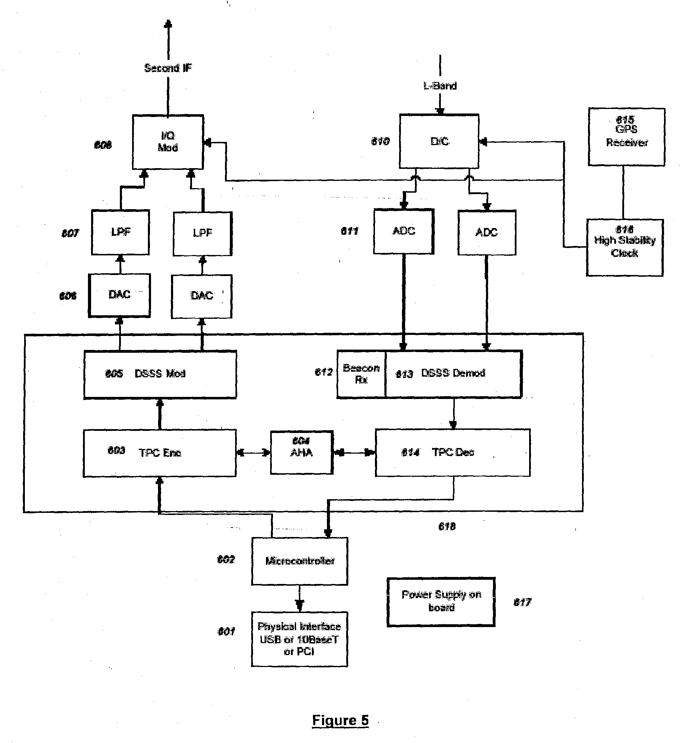

Figure 5 is a block diagram of the modem 406 of the hub station 2. The down converted signal from low noise block converter 402 (Figure 4) is received by the receiver 610 and then converted to digital by an analog-to-digital converter 611, and send to a demodulator 613, preferably, a DSSS or FHSS demodulator, which must be identical to the modulating techniques used in remote station, for example modulate and demodulate using DSSS. The demodulator 613 will demodulate the signal and un-spread the data before passing it to the forward error correction decoder 614, which may be a turbo coding decoder. The decoded data is then transferred to micro controller 602 for further processing, such as, for example, protocol translation, extracting the extra control data added by micro controller 302 of the transmit station 1, or otherwise as required. The output of the micro controller 602 is then passed to the user via the physical interface 601, which may be an RJ45 10BaseT interface.

The Global Positioning System 615 and 315 is required to receive GPS signals, for providing the remote terminal location, and timing for the both hub and remote terminals. The high stability clock 616 and 316 output is fed to the receiver 610 and 310, I/Q modulator 608 and 308, up converter 407 for hub 2, or block up converter 205 for remote terminals 1.

The Beacon signal of the system is received, down converted in the same manner as the normal signal, and further processed by the beacon receive modules 612, 312 for antenna pointing purpose. With this beacon, the antenna 400 is able to be accurately pointed at the correct satellite 4 at Figure 1 c, and for verification to take place.

Communication from hub station 2 to the remote terminal 1 is the same procedure as from the remote terminals 1 to the hub station 2 and thus a signal received at remote terminal 1 is processed in the same manner as the signal received as hub station 2; and signals transmitted by hub station 2 are processed in the same manner as those transmitted by remote terminal 1.

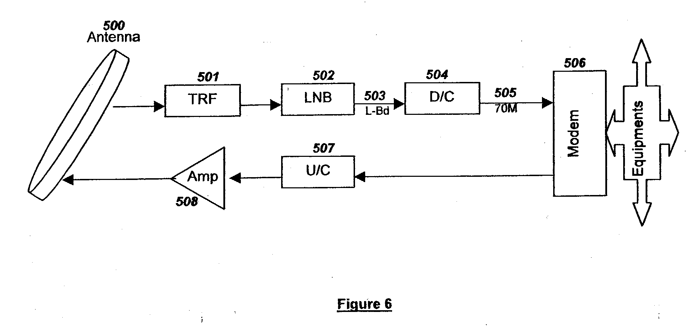

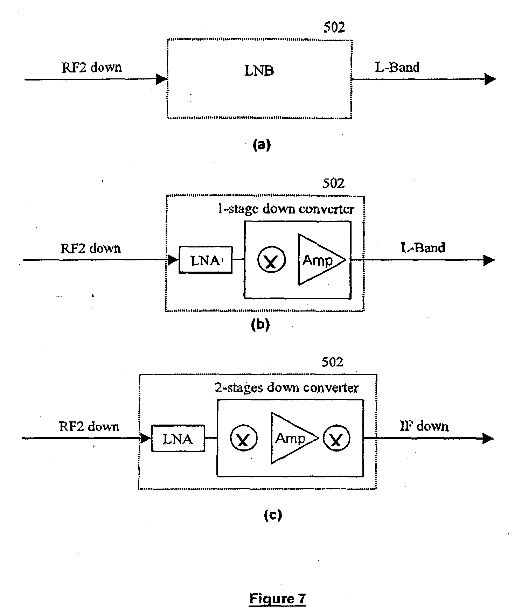

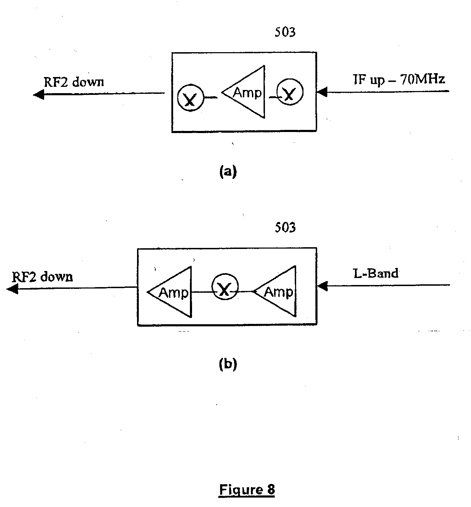

Figure 6 shows that by varying 501, 502 and 503 using different combination as shown in Combination 1, 2 and 3 in Figure 7 and Combination 1 and 2 in Figure 8, another version of the system can be applied to any digital communication systems and any network topology.

In Figure 6, antenna 500 can be a transmit only, receive only, transmit and receive or otherwise, depending on the application requirement. If antenna 500 is for transmit only, down converter 502 would not be required. If Antenna 500 is for receive only, up converter 503 would not be required for the system. RF Connector 501 may have a transmit reject filter and therefore may be able to isolate the transmitted signal and the received signal. RF connector 501 may also have RF switches to allow the transmission to be switched to transmit or receive.

Additionally or alternatively, down converter 502 may be in accordance with (a), (b) or (c) of Figure 7, depending on the incoming frequency RF2 down in Figure 6. RF2 may be C-Band, Ku-Band, S-Band or otherwise. Down converter 502 converts the signal according to the application requirements with the signal output being indicated as IF down in Figure 6. IF down may be L-Band, 70Mhz or otherwise. For example, Figure 7(a) uses a low noise block (LNB) to convert RF2 to L-Band; Figure 7(b) uses a low noise amplifier (LNA) with a 1-stage down converter to convert RF2 to L-Band; and Figure 7(c) uses a low noise amplifier (LNA) with a 2-stage down converter to obtain a lower frequency, such as, for example, 70MHz, 140MHz or otherwise.

Up converter 503 may be in accordance with (a) or (b) of Figure 8, depending on the desired signal output RF2 up in Figure 6, RF2 up may be C-Band, Ku-Band, S-Band, or otherwise. Up converter 503 will convert the signal according to the application requirements. For example, in Figure 8(a), two mixers are used to up convert a low frequency, such as, for example, 70MHz, 140MHz or otherwise, to a desired signal output. Figure 8(b), which uses BUC 503 to up convert an L-Band signal to a desired signal output.

The invention is applicable to any digital communication systems and any network topology. The set-up of the terminals in the network may be identical or different, depending on the topology used and application requirements.

The mobile communication system is designed to provide portability to users, while maintaining efficient terminal operation. The techniques described enable the mobile communication system to be implemented using relatively small, and preferably relatively portable, remote antennas.

The present invention also provides a computer usable medium comprising a computer program code that is configured to cause at least one processor to execute one or more functions to enable an apparatus to perform the method described above.

Whilst there has been described in the foregoing description preferred embodiment of the present invention, it will be understood by those skilled in the technology that many variations or modifications in details of design, construction and operation may be made without departing from the present invention.

## Claims

1. A digital communication system for communication between a first terminal and a second terminal, the first terminal comprising a spread spectrum modulator for spreading a transmitted signal, the transmitted signal being spread by a spread factor.

2. A system as claimed in claim 1, wherein the spread factor is in the range 1 to 999.

3. A system as claimed in claim 1 or claim 2, wherein the spread factor is in the range 10 to 50.

4. A system as claimed in any one of claims 1 to 3, wherein the spread factor is 31.

5. A system as claimed in any one of claims 1 to 4, wherein the spread spectrum modulator is selected from the group consisting of direct sequence spread spectrum modulator, and frequency hopping spread spectrum modulator.

6. A system as claimed in any one of claims 1 to 5, wherein the second terminal comprises a spread spectrum demodulator.

7. A system as claimed in claim 6, wherein the spread spectrum demodulator. is selected from the group consisting of: a direct sequence spread spectrum demodulator, and frequency hopping spread spectrum demodulator.

8. A system as claimed in claim 5, wherein the direct sequence spread system spectrum modulator forms part of a first terminal modem.

9. A system as claimed in claim 8, wherein the first terminal modem also comprises at least one of: an interface, a microprocessor, a forward error correction encoder, a further modulator, an up converter, a block up converter, and an amplifier.

10. A system as claimed in claim 7, wherein the direct sequence spread spectrum demodulator forms part of a second terminal modem.

11. A system as claimed in claim 10, wherein the second terminal modem further comprises at least one of: a block converter, a down converter, a microcontroller, and an interface.

12. A system as claimed in claim 8, wherein the first terminal modem is part of a first terminal processing equipment, the first terminal processing equipment further comprising at least one of: a transmit reject filter, a low noise block filter, a block up converter, an up converter, and an amplifier.

13. A system as claimed in claim 10 or claim 11, wherein the second terminal modem is part of a second terminal processing equipment, the second terminal processing equipment further comprising at least one of: a transmit reject filter, a block converter, a microcontroller.

14. A system as claimed in any one of claims 1 to 13, wherein the first terminal is a remote terminal and the second terminal is a hub terminal.

15. A method for the reduction of noise relative to a signal, the method including the steps:
(a) at a first terminal, generating a signal to be transmitted;
(b) at the first terminal modulating the signal to spread the signal to form a spread signal; and
(c) the first terminal transmitting the spread signal.

16. A method as claimed in claim 15, wherein the spread signal is received by a second terminal, the second terminal using a demodulator to de-spread the spread signal and any received signal noise.

17. A method for the reduction of noise relative to a signal, the method including the steps:
(a) a second terminal receiving a spread signal;
(b) the second terminal using a demodulator to de-spread the spread signal and any received signal noise to form the signal and to reduce the received signal noise.

18. A method as claimed in claim 17, wherein the spread signal is transmitted by a first terminal, the first terminal modulating a transmitted signal to spread the transmitted signal to form the spread signal prior to transmitting the spread signal.

19. A method as claimed in any one of claims 15, 16 and 18, wherein the first terminal comprises a spread spectrum modulator for spreading the transmitted signal, the transmitted signal being spread by a spread factor.

20. A method as claimed in claim 19, wherein the spread factor is in the range 1 to 999.

21. A method as claimed in claim 19 or claim 20, wherein the spread factor is in the range 10 to 50.

22. A method as claimed in any one of claims 19 to 21, wherein the spread factor is 31.

23. A method as claimed in claim 19, wherein the spread spectrum modulator is selected from the group consisting of: a direct sequence spread spectrum modulator, and a frequency hopping spread spectrum modulator.

24. A method as claimed in any one of claims 16 to 23, wherein the second terminal comprises a spread spectrum demodulation.

25. A method as claimed in claim 24, wherein the spread spectrum demodulator is selected from the group consisting of: a direct sequence spread spectrum demodulator, and a frequency hopping spread spectrum demodulator.

26. A method as claimed in any one of claims 19 to 22, wherein the direct sequence spread system spectrum modulator forms part of a first terminal modem.

27. A method as claimed in claim 26, wherein the first terminal modem also comprises at least one of: an interface, a microprocessor, a forward error correction encoder, a further modulator, an up converter, a block up converter, and an amplifier.

28. A method as claimed in claim 24, wherein the spread spectrum demodulator forms part of a second terminal modem.

29. A method as claimed in claim 28, wherein the second terminal modem further comprises at least one of: a block converter, a down converter, a microcontroller, and an interface.

30. A method as claimed in claim 26 or claim 27, wherein the first terminal modem is part of a first terminal processor.

31. A method as claimed in claim 28 or claim 29, wherein the second terminal modem is part of a second terminal processor.

32. A method as claimed in any one of claims 16 and 18 to 31, wherein the first terminal is a remote terminal and the second terminal is a hub terminal.

33. Computer usable medium comprising a computer program code that is configured to cause at least one processor to execute one or more functions to enable an apparatus to perform the method of any one of claims 15 to 32.
